# EUROPEAN PATENT APPLICATION

(11) **EP 0 897 737 A1**
(43) Date of publication of application: **24.02.1999**
(21) Application number: 98202736.9
(22) Date of filing: 14.08.1998
(51) Int. Cl.: B01D 29/09, B01D 33/04

(54) **Band filter and filtering method**

(30) Priority: 14.08.1997 NL 1006773
(71) Applicant: NIVOBA ENGINEERING B.V., NL-9641 HM Veendam (NL)
(72) Inventor: Kalk, Hendrik, 9649 AW Muntendam (NL); Timmer, Willem, 9641 GM Veendam (NL); Mulder, Berends, 9641 HM Veendam (NL)
(74) Representative: Smulders, Theodorus A.H.J., Ir.

(57) **Abstract**

Filter with a drum (11; 41) and a filter material web (19; 49) wound onto the drum (11; 41), which forms a multilayer filter packet (13; 43). In operating condition, an unwound portion of the filter material web (19; 49) extends away from the filter packet (13; 43). The drum (11; 41) is rotatable for unwinding filter material, which incorporates captured filtered-out constituents, from the drum (11; 41). Filtering proceeds through a plurality of layers of filter material, the resistance during filtering being limited by unwinding saturated filter material from the drum (11; 41). When the filter material has run out, a new filter material web (19; 49) can be wound onto the shell (12; 42) very fast. If desired, filtered-out material can generally be easily separated from the filter material.

## Description

This invention relates to a filter according to the introductory portion of claim 1, and to a filtering method according to the introductory portion of claim 18.

Such filters and filtering methods are known from practice in the form of filters and filtering methods whereby a substance to be filtered is presented on the outside of the circumferential shell of the drum and a filtrate is obtained on the inside of the circumferential shell. Provided around the shell, which is generally formed by a supporting gauze, is a filter cloth.

Filtration on the filter cloth alone is adequate only in a limited number of applications. Many materials cannot be filtered out by the cloth itself. Especially if very fine particles are to be removed to a very great extent, filter aids in the form of a so-called precoat are provided externally around the drum. Used as precoat are, for instance, diatomaceous earth, pearlite or wood flour, each time in classified form. Replacing the precoat is laborious, entails interruption of the filtration process (typically, an interruption of an hour after 2-4 hours of filtration is necessary) and thus limits productivity. Further, the removal of waste in the form of the precoat with the filtered-out material is generally rendered more difficult and more costly.

The object of the invention is to offer a solution by which these drawbacks can be obviated.

According to one aspect of the present invention, this object is achieved by designing a filter in accordance with the characterizing portion of claim 1.

According to another aspect of the present invention, this object is achieved by designing a filtering method in accordance with the characterizing portion of claim 18.

The invention makes it possible to filter through a plurality of layers of filter paper or other weblike filter material which is wound onto the shell of the drum. Undue resistance during filtering is avoided, or at least can be avoided, by unwinding unduly saturated filter material from the circumference of the drum and thereby bringing it outside the area where it is active as filtering material when the filter is in operation. A further advantage of the present invention is that by unwinding filter material, material captured during filtering can be removed from the drum in a very simple manner and to a highly complete extent. When the filter material has run out, a new filter material web can be wound onto the drum very fast.

Generally, the filtered-out material can, if so desired, be readily separated from the filter material, depending on the kind of weblike filter material that is used and the nature of the filtered-out material, for instance by washing and/or scraping off. This is advantageous for the purpose of obtaining or recovering the filtered-out material and/or reuse of the filter material. It is also possible to destroy the weblike material with the filtered-out material, for instance by burning it.

The invention further makes it possible to contact a substance or composition with the passing substance in a simple manner and to restrain it from flowing along with the substance. In operation, such a substance or composition can, for instance, enter into a particular reaction with the passing substance or promote such a reaction. This substance or composition can be formed by the material of the weblike filter. The weblike filter can also consist of a support and the substance or composition in question, which is carried by the support. That the substance passes through a plurality of layers of the filter packet is then conducive to a complete treatment of that substance.

It is also possible to use as filter material a combination of a support and a precoat applied to it. Owing to the precoat being designed as part of a web of filter material wound onto the drum, the precoat, according as it becomes saturated or clogs up, can be removed from the drum along with the support, without requiring the filtering process to be frequently interrupted.

Depending on the application, it can be of particular importance to prevent material to be filtered out from slipping through, or to prevent the filter from clogging up, or both. Leakage of material to be filtered out and clogging up of the filter can be very effectively controlled by choosing an elaboration of the present invention whereby filter material is not only unwound from the drum, but is simultaneously wound onto the drum at the opposite end of the filter packet wound onto the drum. To that end, the filter packet wound onto the drum is locally diverted away from the drum. Between the filter packet locally diverted away from the drum and the drum, a holder is arranged, which carries a continuation of the web of material of the filter packet.

The filter material is preferably passed from this holder to the drum, so that from the inside of the filter material wound onto the shell, new filter material is supplied. It is also possible, however, to pass the filter material from the drum to this holder, so that the filter material is removed on the inside of the filter packet wound onto the shell.

Further, the filter material is preferably unwound from the drum on the upstream side of the packet of filter material wound onto the shell of the drum, that is, on the outside if filtration proceeds from the outside to the inside, and on the inside if filtration proceeds from the inside to the outside. Thus, during filtering the filter material moves gradually countercurrently to the direction of filtration, so that leakage is prevented, the most downstream layer of filter material is the freshest and the most saturated layer of filter material of the filter packet is removed, so that the resistance of the filter is effectively limited. Further, the number of layers of filter material through which filtering proceeds is rendered constant as long as the unwinding of filter material is compensated by the supply of fresh filter material.

Other particularly advantageous embodiments and modes of carrying out the invention are set forth in the dependent claims.

Hereinafter, further objects, embodiments, effects and advantages of the invention are further elucidated on the basis of exemplary embodiments, including the exemplary embodiment presently preferred most, with reference to the drawings, wherein:
Fig. 1 is a representation of a filter system with a filter according to a first exemplary embodiment of the invention in vertical cross-section and with peripheral equipment and lines in schematic representation; and
Figs. 2 and 3 are representations of filter systems with filters according to a second and a third exemplary embodiment of the invention in vertical cross-section and with peripheral equipment and lines in a further schematized representation.

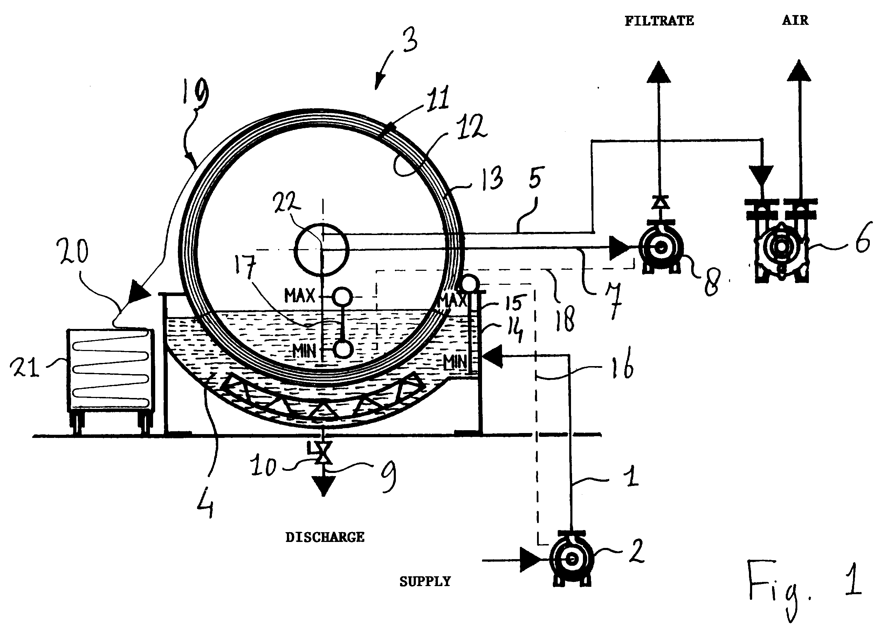

The filter system shown in Fig. 1 is made up of a supply pipe 1 which includes a supply pump 2; a filter 3, connected to the supply pipe 1, for filtering particles from a substance 4 which is supplied via the supply pipe 1; a vacuum pipe 5, connected to the filter 3, leading to a vacuum pump 6; and a filtrate pipe 7, connected to the filter 3, which, via a filtrate pump 8, leads to a reservoir for storing filtered filtrate. Further connected to the filter 3 is a discharge pipe 9 for draining the filter for the purpose of maintenance and cleaning activities. The discharge pipe 9 includes a shut-off valve 10.

The filter 3 shown is built up from a drum 11 having a shell 12 from gauze and substantially hermetically sealed ends; a circumferential packet of filter material 13 carried by the shell 12; and a basin 14 for immersing at least a lower portion of the drum 11, in which basin, in the operative condition shown, a working stock of substance 4 to be filtered is maintained. The gauze has passages for allowing filtrate to pass. The drum 11 has a substantially horizontal axis of rotation 22 which is located above the basin 14.

For controlling the working stock of substance 4 to be filtered, a liquid level feeler 15 is arranged in the basin, on the outside of the filter packet 13, which feeler 15 is coupled via a connection 16 to the supply pump 2. Thus, the supply pump 2 can be operated depending on the level of the liquid on the supply side of the filter packet 13.

Also on the inside of the filter packet 13 a liquid level feeler 17 is arranged in the basin. This liquid level feeler 17 is coupled via a connection 18 to the filtrate pump 8, in order to operate the filtrate pump 8 depending on the level of the liquid on the delivery side of the filter packet 13.

The filter material is formed by a filter material web 19 which has been wound onto the shell 12 to form a filter packet 13 consisting of a plurality of layers of the weblike filter material 19. A portion 20 of the filter material web 19 extends from the filter packet 13 to a collecting container 21. By rotation of the drum 11 about the axis of rotation 22, filter material 19 can be wound off the drum 11 to the collecting holder 21.

In operation, the substance 4 is supplied to the basin 14 on an upstream side - here the outside - of the filter packet 13. By means of the vacuum pump 6 and via the pipe 5 a reduced pressure is created in the drum 11. As a result, the substance 4 passes through the filter packet 13 to the downstream side - here the inside - of filter packet 13 while leaving constituents to be filtered out behind in the filter packet 13. Depending on signals delivered by the liquid level feeler 17 on the inside of the drum 11, the thus obtained filtrate is removed from the drum 11 via the filtrate pipe 7 under the action of the filtrate pump 8. When such an amount of substance 4 has passed through the filter that the level of the basin has fallen to a particular value, the supply pump 2 is activated in response to signals of the liquid level feeler 15 on the outside of the drum 11. Preferably, the filter system automatically sets itself, such that the supply pump 2 can remain in operation continuously, with the flow adjusting itself to the flow of substance 4 passing through the filter packet 13.

By rotating the drum 11 about the axis of rotation 22, the weblike filter material 19 - which, prior to filtering, has been wound onto the shell 12 to form the multilayer filter packet 13 around the shell 12 - incorporating captured filtered-out constituents of the substance, is unwound from the shell 12 and collected in the collecting holder 21. Substance which has penetrated into a portion of the filter packet 13 while that portion of the filter packet 13 was immersed in the substance 4 in the basin 14, leaves the basin 14 along with that portion of the filter packet 13 during the rotation of the drum, but filtrate constituents thereof continue to move through the filter packet 13 owing to the reduced pressure in the drum 11. Thus, further filtering, or at least further treatment, proceeds in the portion of the filter packet 13 in question. At the time when the outermost layer of the relevant portion of the filter packet 13 is unwound, it contains only very little of the fraction of the substance that is to be allowed to pass.

Because filtering proceeds through a filter packet consisting of a plurality of layers of weblike filter material, the filter and the filtering method as described are suitable for applications where conventionally precoats, such as diatomaceous earth, pearlite or wood flour, are provided around the shell in order to filter out small particles to a sufficient extent as well. The drawbacks entailed in the use of a precoat, viz. frequent and prolonged interruption of the filtering process for refreshing the precoat, and the difficult processing of used precoat, are avoided, however, when using the filter and the filtering method as described. Depending on the fineness of the weblike filter material, particles smaller than 1 µm can be filtered out very effectively. By starting, for instance, from a drum with 1,000 windings of the weblike filter material, in an average application, a standing time of the filter of about 1 week can be achieved. The filter material is unwound from the drum 11 depending on the extent to which the outermost layer has clogged up.

Examples of possible applications of the proposed filter and the method described are: dehydration of refined starch prior to thermal drying, recovering wine from the lees of wine barrels, recovering juice from fruit pulp, filtering yeast from beer, filtering activated carbon from glucose solutions thereby discolored, filtering liquid fertilizer, dehydration of salt crystals, drying sediment from waste water purification plants, treating drilling mud in drilling for oil and/or gas, separating waste material in coffee production, and desulfurization of flue gas. More generally, applications are involved in which fine particles are to be filtered from a gas or a liquid. The objective may be to recover the particles to be filtered out, to recover the filtrate, or both at the same time.

It is also possible, however, to use a filter web which contains a substance or a composition which participates in a certain reaction in the substance passing through the filter, or which promotes such a reaction.

Because filter material is unwound from the circumference of the drum 11, and is thus moved outside the area where it is active as filter material, the resistance of the filter packet 13 is prevented from rising to unacceptable values as a result of the filter clogging up, even if a very long standing time as described above is employed.

In order to further limit slip through the filter, the drum 11 can be rotated faster according as the number of layers of filter material present around it decreases.

Through the unwinding of the filter material web 19, the product or waste collected during filtering is removed from the drum 11 in a very simple manner and to a highly complete extent. When the filter material web 19 has run out, a new filter material web can be wound onto the shell 12 very fast, for instance from a spool suspended in the proximity of the drum 11.

For achieving a uniform filtering effect and a high productivity, it is advantageous for the unwinding of the weblike filter material 19 from the shell 12 to be carried out during filtering. The filtering process is then not interrupted during the removal of filter material 19 and particles collected therein, from the filter area.

The inlet of the vacuum pipe 5 and the unwound portion 20 of the filter material web 19 are located on opposite sides of the filter packet 13, so that a pressure drop across the filter packet 13 generated by the vacuum is so directed relative to the unwound portion 20 of the filter material web 19 that this unwound portion 20 of the filter material web 19 is located on the upstream side of the filter packet. Thus, the most upstream layer, which is used up to the highest extent, is wound off the filter packet 13.

It is also possible, for that matter, to design the filter material web as such as a multilayer construction, so that two or more layers are wound off the drum simultaneously.

In some cases, it is desirable not to apply the vacuum across certain drum segments oriented in a fixed direction, so as to prevent undue influx of air through areas where filtered-out material has been removed from the drum and no new substance is presented. Further, in some cases it would be advantageous to temporarily remove the vacuum altogether if there is no supply of material to be filtered. Compared with filters with a precoat, filters of the proposed type provide the advantage that the vacuum can be removed from highly sloping or even downwardly directed segments of the shell of the drum 11, without encountering the problem of the filter material falling off the shell 12.

Owing to the inlet opening of the vacuum pipe 5 communicating with the inside of the drum 11, the pressure drop is directed from the outside to the inside of the drum 11. This provides the advantage, firstly, that the particles to be filtered out deposit on the outside of the drum 11, where they are easier to remove than on the inside of the drum 11. Further, in combination with the unwinding of the filter material web 19 on the upstream side of the filter packet 13, the advantage is gained that also the unwound filter material 19 is released on the outside of the drum 11. On the outside of the drum 11 more space is available to treat and store the unwound filter material 19 than on the inside of the drum 11.

For applications involving the filtering of particles from a substance, the filter material 19 preferably consists of a material in the form of a fleece, such as a cellulose and/or viscose fleece of a weight of 17-50 g/m².

In order to make it possible to use a drum of axial dimensions greater than the largest available width of the weblike filter material, the drum can have two or more shell portions, each extending circumferentially and succeeding each other in axial direction. Onto each of these shell portions, a web of the filter material can be wound.

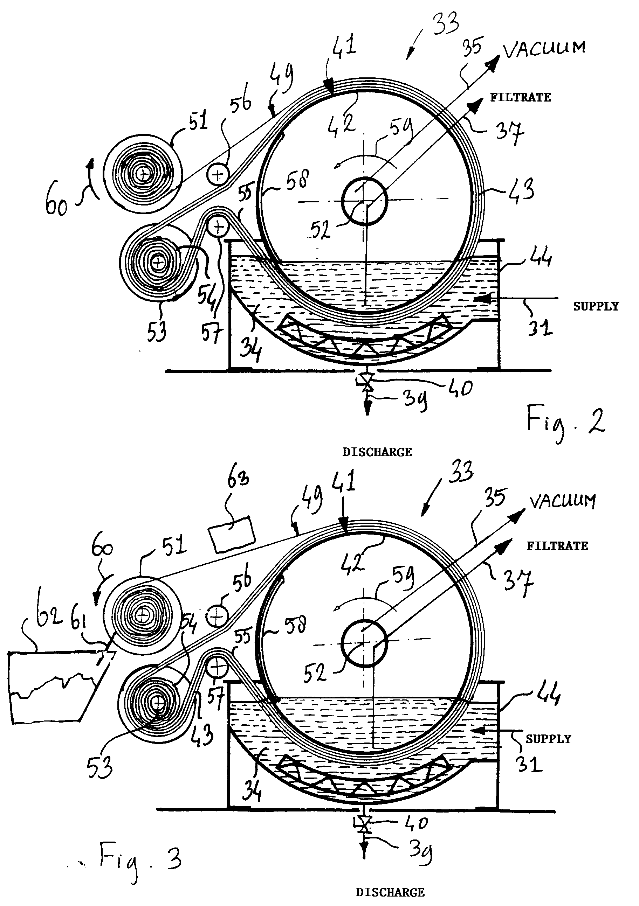

In Figs. 2 and 3 corresponding parts have identical reference numerals. The filter systems shown in Figs. 2 and 3, too, are equipped with a supply pipe 31, a filter 33 connected to the supply pipe 31, a vacuum pipe 35 connected to the filter 33, and a filtrate pipe 37 connected to the filter 33. Further, in these filter systems, too, there is connected to the filter 3 a discharge pipe 39 with a shut-off valve 40 for draining the filter 33.

The filters 33 shown in Figs. 2 and 3 are each built up from a drum 41 having a shell 42 provided with passages (not visible in the drawing) for passing filtrate, and substantially hermetically closed ends; a circumferential packet of filter material 43, carried by the shell 42; and a basin 44 for immersing at least a lower portion of the drum 41. In the operative condition shown, the basin 44 contains a working stock of substance 34 to be filtered. The drum 41 has a substantially horizontal axis of rotation 52 which is located above the basin 44.

The filter packet 43 wound onto the shell 42 is locally diverted away from the shell 42 and trained onto a holder 53. That holder 53 is located between the filter packet 43 from weblike filter material 49, wound onto the shell 42, and the drum 41. The holder 53 carries a stock 54 of the filter material 49 which, via an intermediate portion 55 of the filter material 49 between the holder 53 and the drum 41, merges into the packet 43 of the filter material web 49, wound onto the shell 42.

Prior to filtering, a full holder 53 is placed in the filter and filter material is unwound from that holder 53 to the shell surface 42 of the drum 41 and, in addition, locally diverted from that shell surface along a path running away from the drum 41 and around the holder 53 on the outside thereof. This is continued until a filter packet 43 around the shell surface 42 has been obtained that contains the desired number of layers of the filter material web 49. Then the leading end of the filter material web 49 is coupled to the collecting holder 51 which, in the present example, is designed as a spool.

In operation, upon rotation of the drum 41, the filter packet 43 wound onto the shell 42 is thus locally diverted away from the shell 42, along the path around the holder 53, while further filter material 54 is transferred from the holder 53 via the intermediate portion 55 of the filter material web 49 between the holder 53 and the drum 41, to the filter packet 43 wound onto the shell 42.

Thus, with the filters 33 according to Figs. 2 and 3, it is possible, in addition to unwinding filter material 49 from the outside of the filter packet 43, to supply material to the filter packet 43 on the inside. It is also possible, for that matter, to supply material on the inside without unwinding it on the outside of the filter packet, or to unwind the material on the inside, optionally in combination with a supply from the outside.

In order to keep the segment of the shell 42 of the drum 41 that is not abutted by the filter packet 43 as short as possible, the filter packet 43 has been passed over divert rollers 56, 57 between the drum 41 and the holder 53.

Because the holder 53 between the portion of the filter material wound onto the shell 42 that has been unwound from the shell 42 and the drum 41 is designed as a spool 53, a large amount of the filter material can be stored on the holder in a compact manner. Further, the diverted filter material can pass over the filter material 54 stored on the spool 53, with the spool 53 further serving as divert roller for guiding the portion of the filter packet 43 diverted from the shell surface 42. Further, by winding, the filter material can be transferred from the holder 53 to the drum 41, so that a constant supply of filter material is obtained, with little risk of the supply jamming.

Because in the filters 33 according to Figs. 2 and 3 one of the holders 51, 53 is located inside the filter packet 43 wound onto the shell, and the other one of the holders 51, 53 is located outside the filter packet 43 wound onto the shell, and the filter material runs from the one holder 51 to the other holder 53, the unwinding of material on the one side of the filter packet 43 can be simply combined with the supply of material at the other end of the filter packet 43. Filter material is then supplied from the holder 53 inside the filter packet 43 wound onto the shell 42, is then passed more than once around the shell 42, and then wound to the other of the holders 51 outside the filter packet 43 wound onto the shell 42.

As a result, in operation, the number of layers of filter material 49 in the filter packet 43 is always constant, at least as long as the unwinding of filter material on one side of the filter packet 43 is compensated by the winding of filter material on the other side of the filter packet 43. The constant number of layers can be accurately adapted to the requirements of the filtering process to be carried out. This makes it possible, with a filter packet 43 consisting on average of a much smaller number of layers of filter material than the filter packet 13 of the filter 3 according to Fig. 1 - preferably 2-50 and more particularly 5-25 layers - yet to achieve a long standing time of a filter material web 49. Owing to the averagely smaller number of layers, the resistance met by the substance while passing the filter is limited.

Along a section of the shell 42 of the drum 41 where the filter packet wound onto the shell has been diverted from the shell, a screen 58 is arranged for preventing the passage of false air. It is also possible, for this purpose, to divide the drum surface into sections succeeding each other in circumferential direction and designing a suction head in the drum such that the vacuum does not reach one or more of those segments. Such a construction of the drum is known per se and therefore not further described here.

In order to make it possible to store unwound filter material efficiently and compactly, the collecting holders 51 in the filters according to Figs. 2 and 3 are also designed as spools.

In the filter according to Fig. 2, the filter material web 49 is wound onto the collecting spool 51 and onto the drum 41, such that when unwinding filter material 49 from the drum 41 and when winding filter material 49 onto the collecting spool 51, the drum 41 and the collecting spool 51 are rotated in opposite senses of rotation (arrows 59, 60). As a consequence, the side of the filter material which, at least in the condition of being wound onto the drum 41, was remote from the drum 41, and hence in many cases carries a cake consisting of filtered-out material, is turned inside when wound onto the collecting spool 51. This is advantageous if it is desired to keep the filtered-out material and the filter material, at least provisionally, together, because after being wound onto the collecting spool 51, relevant portions of the filter material confine the cake deposited thereon in inward direction.

If it is desired to scrape filtered-out material from the filter material 49, it is generally preferred, as represented in Fig. 3, to wind the filter material web 49 onto the collecting spool 51 and onto the drum 41, such that when unwinding filter material 49 from the drum 41 and when winding filter material 49 onto the collecting spool 51, the drum 41 and the collecting spool 51 are rotated in the same sense of rotation (arrows 59, 60 in Fig. 3). The cake with material precipitated against the filter material, while being wound onto the collecting spool 51, is thereby turned outside and the attendant bending of the filter material 49 promotes the release of the filtered material. For removing the filtered-out material, the filter according to Fig. 3 is provided with a squeegee 61 mounted above a receptacle 62.

That filtered-out material leaves the drum 41 on the web of the filter material further provides the advantage that the filtered-out material can be passed along other treating stations in a simple manner, for instance along the dryer 63, shown in Fig. 3, having a fan with a heating element for heating air displaced by the fan. It is also possible to use other treating stations, such as an apparatus for disinfecting filtered-out material by means of irradiation.

Filtered-out constituents can thus be effectively separated from the filter material 49 with the filter according to Fig. 3, before the filter material 49 is stored on the collecting spool 51.

## Claims

1. A filter for filtering a substance, comprising:
a drum (11; 41) with a shell (12; 42) arranged for passing a filtrate,
a circumferential filter material carried by said shell (12; 42),
a supply (1, 2; 31) for supplying a substance (4; 34) to be filtered, on an upstream side of said shell (12; 42), and
a discharge (7, 8; 37) for discharging filtered filtrate on an opposite, downstream side of said shell (12; 42),
**characterized in that**
the filter material comprises a filter material web (19; 49), which web forms a multilayer filter packet (13; 43) wound onto said shell (12; 42),
while in operating condition at least an unwound portion (20) of the filter material web (19; 49) extends from the filter packet (13; 43) to a collecting area (21; 51), and
the drum (11; 41) is rotatable relative to said unwound portion of the filter material web (19; 49) for unwinding filter material from the drum (11; 41) to the collecting area (21; 51).

2. A filter according to claim 1, further comprising means (1, 2, 5, 6; 31, 35) for generating a pressure drop between upstream and downstream sides of said filter packet (13; 43), said unwound portion (20) of the filter material being located on the upstream side of the filter packet (13; 43).

3. A filter according to claim 2, wherein said pressure drop is directed from the outside to the inside of the filter packet (13; 43).

4. A filter according to any one of the preceding claims, wherein the filter packet (43) wound onto said shell (42) is locally diverted away from said shell (42); wherein the filter (33) further comprises a holder (53) located between the diverted portion of the filter packet (43) and the drum (41); and wherein filter material (54) carried by said holder (53) merges via an intermediate portion (55) of the filter material between said holder (53) and the drum (41), into the filter packet (43) wound onto said shell (42).

5. A filter according to claim 4, wherein said holder (53) between said diverted portion of the filter packet (43) wound onto said shell (42) and the drum (41) is designed as a spool.

6. A filter according to claim 4 or 5, wherein an other of said holders (51) is located outside the filter packet (43) wound onto said shell (42), the filter material web (49) running from said one holder (53) to said other holder (51).

7. A filter according to claim 4, 5 or 6, wherein along a section of said shell (42) of the drum (41) where the filter packet (43) wound onto said shell (42) is diverted away from said shell (42), a screen (58) is arranged for preventing the passage of false suction.

8. A filter according to any one of the preceding claims, wherein said collecting area is formed by a collecting spool (51).

9. A filter according to any one of the preceding claims, further comprising an apparatus (61, 63) remote from the drum (41) for treating filter material which has been unwound from the drum (41).

10. A filter according to claim 9, wherein said apparatus (61) for treating filter material which has been unwound from the drum (41) comprises a scraper (61).

11. A filter according to claim 9 or 10, wherein said apparatus (61) for treating filter material which has been unwound from the drum (41) comprises a dryer (63).

12. A filter according to any one of claims 8-11, wherein the filter material web (49) is wound onto said collecting spool and onto said drum (41), such that when filter material is being unwound from the drum (41) and when filter material is being wound onto the collecting spool (51), the drum (41) and the collecting spool (51) rotate in the same sense of rotation (59, 60).

13. A filter according to claim 8, wherein the filter material web (49) is wound onto said collecting spool and onto said drum (41), such that when filter material is being unwound from the drum (41) and when filter material is being wound onto the collecting spool (51), the drum (41) and the collecting spool (51) rotate in opposite senses of rotation (59, 60).

14. A filter according to any one of the preceding claims, further comprising a basin (14; 44) for receiving a substance to be filtered, the drum (11; 41) being suspended such that in operation exclusively a lower sector of the circumference of the drum is immersed in the substance to be filtered in the basin (14; 44), the drum (11; 41) having a substantially horizontal axis of rotation (22; 52), and the web of filter material having a portion leaving a portion of the filter material wound onto the drum in a position spaced above the level of the substance to be filtered in the basin.

15. A filter according to any one of the preceding claims, wherein the filter material is designed as a fleece-like material.

16. A filter according to claim 15, wherein the fleece is a cellulose and/or viscose fleece of a weight of 17-50 g/m².

17. A filter according to any one of the preceding claims, wherein the drum (11; 41) comprises at least two shell portions, each extending circumferentially and succeeding each other in axial direction, and onto each of said shell portions an associated web of said filter material is wound.

18. A filtering method for filtering a substance (4; 34), comprising:
supplying said substance (4; 34) on an upstream side of a circumferential filter material provided along a circumferential shell (12; 42) of a drum (11; 41),
passing filtrate constituents of said substance (4; 34) through said filter material to a downstream side of said shell (12; 42),
discharging filtrate on a downstream side of said shell (12; 42), and
removing from said shell (12; 42), along with said filter material, filtered-out constituents of said substance,
**characterized in that**
filter material in the form of a filter material web (19; 49) is used, of which at least a portion is wound onto said shell (12; 42) to form a multilayer filter packet (13; 43) around said shell (12; 42), and
at least a portion of the filter material web (19; 49) incorporating captured filtered-out constituents of said substance, is unwound from said shell (12; 42).

19. A method according to claim 18, wherein unwinding the filter material from said shell (12; 42) occurs during filtering.

20. A method according to claim 18 or 19, wherein the substance (4; 34) to be filtered is supplied on the outside of said drum (11; 41).

21. A method according to any one of claims 18-20, wherein the filter packet (43) wound onto said shell (42) is locally diverted away from said shell (42), and wherein filter material carried by a holder (53) located between the portion of the filter packet (43) wound onto said shell (42) that is diverted away from said shell (42) and the drum (41) merges via an intermediate portion (55) of the filter material between said holder (53) and the drum (41) into the filter packet (43) wound onto said shell (42).

22. A method according to claim 21, wherein the filter material is transferred between said holder (53) and said drum (41) by winding.

23. A method according to claim 21 or 22, wherein the filter material of a holder (53) is wound, inside said filter packet (43) wound onto said shell (42), more than once around said shell (42) of the drum (41) and is wound to an other holder (51) outside the filter packet (43) wound onto said shell (42).

24. A method according to any one of claims 18-23, wherein the filter material, after being unwound from said shell (42), is wound onto a collecting spool (51).

25. A method according to any one of claims 18-24, further comprising treatment, remote from the drum, of filter material which has been unwound from the drum (41).

26. A method according to claim 25, wherein said treatment of filter material which has been unwound from the drum (41) comprises scraping off filtered-out material.

27. A method according to claim 25 or 26, wherein said treatment of filter material which has been unwound from the drum (41) comprises drying filtered-out material on the filter web.

28. A method according to any one of claims 24-27, wherein when filter material is being unwound from said shell (12; 42) and when filter material is being wound onto the collecting spool (51), the drum (11; 41) and the collecting spool (51) are rotated in the same sense of rotation (59, 60).

29. A method according to any one of claims 24-27, wherein when filter material is being unwound from said shell (12; 42) and when filter material is being wound onto the collecting spool (51), the drum (11; 41) and the collecting spool (51) are rotated in opposite senses of rotation (59, 60).

30. A method according to any one of claims 18-29, wherein the drum (11; 41) rotates about a horizontal axis of rotation (22; 52) and at least a lower portion of the drum (11; 41) rotates through a bath (14, 44) with said substance (4; 34).

31. A method according to any one of claims 18-30, wherein filtered-out constituents are at least partly separated from the filter material before said filter material is stored.
